# EUROPEAN PATENT APPLICATION

(11) **EP 4 167 392 A1**
(43) Date of publication of application: **19.04.2023**
(21) Application number: 22153418.3
(22) Date of filing: 26.01.2022
(51) Int. Cl.: H01R 13/533, H01R 24/20, H01R 24/28, H01R 13/627, H01R 13/642

(54) **SET OF CABLE CONNECTORS FOR ELECTRIC MOTOR VEHICLE**

(30) Priority: 14.10.2021 TW 110138239
(71) Applicant: Kunshan Junlei Electronic Co., Ltd., Huaqiao Town, Kunshan City (CN)
(72) Inventor: JI, Huang, Huaqiao Town, Kunshan City (CN)
(74) Representative: Viering, Jentschura & Partner mbB Patent- und Rechtsanwälte

(57) **Abstract**

A set of cable connectors for electric motor vehicle is disclosed, which includes: a first connector and a second connector; a signal terminal module and a power terminal module are separately arranged on the first connector and the second connector, a first protective cover ring is disposed on the first connector, and a second protective cover ring is disposed on the second connector; when the first connector is combined with the second connector, a double protective cover ring structure can be formed, so that the combination of the first connector and the second connector simultaneously provides a combining force between signal terminals, a combining force between power terminals, combining forces of the two protective cover rings, and a combining force between the buckle portions disposed on the first and second connectors.

## Description

### BACKGROUND

### 1. Technical Field

The disclosure is related to a transmission cable, and more particularly to a set of cable connectors for electric motor vehicle such as an electric bicycle or an electric motorcycle.

### 2. Background

In recent years, electric bicycles, electric motorcycles, and electric cars are popular clean technology products; among them, electric bicycles and electric motorcycles are important mobile vehicles for urban short-distance transportation. Generally, the electric bicycles and electric motorcycles need specific transmission cables for signal and electrical power transmission, and require relatively large current during start or acceleration process, so the current transmission cable must be a thicker cable which is able to tolerate a relatively large amount of current.

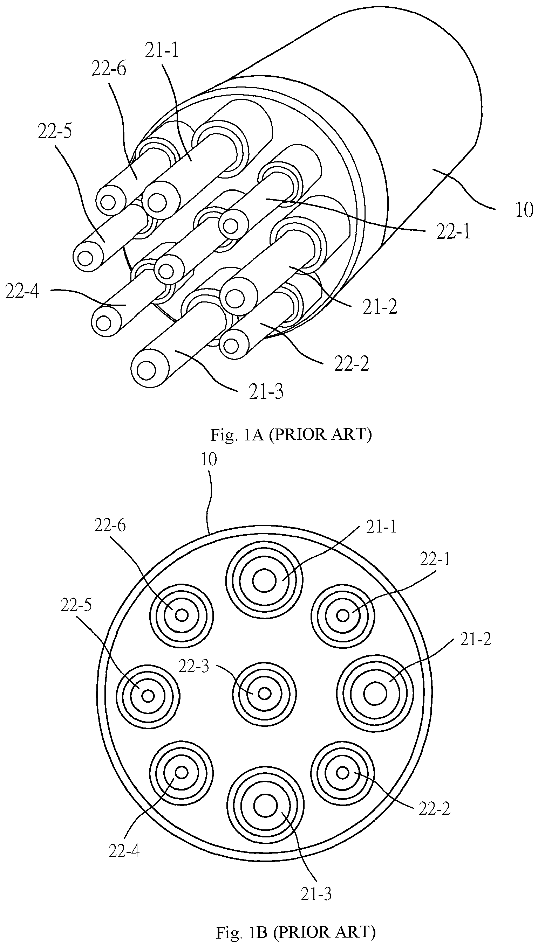

Please refer to Figs. 1A and 1B, which are a perspective view and an elevational view of a male transmission cable of a conventional cable connector for an electric bicycle or an electric motorcycle. As shown in Fig. 1A, three power terminals including a male power connection terminal 21-1, a male power connection terminal 21-2 and a male power connection terminal 21-3 are disposed on a top surface of a body 10 of a male transmission cable; six signal terminals including a male signal connection terminal 22-1, a male signal connection terminal 22-2, a male signal connection terminal 22-3, a male signal connection terminal 22-4, a male signal connection terminal 22-5 and a male signal connection terminal 22-6 are disposed on the top surface of the body of the male transmission cable. The example of Figs. 1A and 1B is the nine-terminal design, that is, the male transmission cable 10 includes 3 power terminals and 6 signal terminals, and a Hall signal cable. The male transmission cable corresponds to a female transmission cable (not shown in figures) line-to-line and can be docked with the female transmission cable in the air. The female transmission cable has a protective cover ring for providing a protection effect after the 9 male terminals of the male transmission cable are inserted into the female transmission cable. In general, the male transmission cable is usually used for an electric motor vehicle, and the female transmission cable is usually connected to a controller.

The structure of the cable connector shown in Figs. 1A and 1B adopts the mutualinterference-mating design (that is, each male terminal and each female terminal have a protruded ring and a recessed ring, respectively), and a user can apply a plugging force by hand to generate interference, to combine the two cable connectors. Furthermore, the above-mentioned design can achieve a waterproof level up to IPX6.

However, the above-mentioned male transmission cable and female transmission cable of the conventional cable connector may fail to tightly combine with each other because of insufficient plugging force, and it may cause the transmission cable to fall off (for example, in high vibration environment) or to be infiltrated by water; furthermore, when the above problem becomes serious, it may further cause the issue of vehicle safety. Therefore, how to develop a cable connector for electric motor vehicle with a more stable combination mechanism and a higher waterproof level has become an important issue in the industry.

### SUMMARY

In order to solve the conventional technology problem, the disclosure provides a set of cable connectors for electric motor vehicle; a signal terminal module and a power terminal module are separately disposed on and integrated into a first connector and a second connector of the set of cable connectors, and a double protective cover ring is also integrated on the set of cable connectors, so that when the first connector and the second connector are combined with each other, the set of cable connectors of the disclosure can provide five combining forces including a combining force between signal terminals, a combining force between power terminals, combining forces of two protective cover rings, and a combining force between the buckle portions disposed on the first and second connectors, thereby achieving technical effect of providing extremely stable combination and higher waterproof level.

According to an embodiment, the disclosure provides a set of cable connectors for electric motor vehicle, the set of cable connectors includes a first connector and a second connector. The first connector includes a first body; a male signal connection terminal base disposed on a connection surface of the first body and including a plurality of first signal connection terminals; a female power connection terminal base disposed on the connection surface of the first body and including at least two female power connection insertion holes formed thereon; and a first protective cover ring disposed on the connection surface of the first body and around the male signal connection terminal base and the female power connection terminal base; wherein a first space is form between the first protective cover ring, the male signal connection terminal base and the female power connection terminal base. The second connector including a second body; a female signal connection terminal base disposed on a connection surface of the second body and including a plurality of second signal connection terminals corresponding in position to the plurality of first signal connection terminals; at least two male power connection terminals disposed on the connection surface of the second body and corresponding in position to the at least two female power connection insertion holes; a second protective cover ring disposed on the connection surface of the second body and around the female signal connection terminal base and the male power connection terminal, wherein a second space is formed between the second protective cover ring and the female signal connection terminal base and the male power connection terminal; wherein when the first connector and the second connector are combined with each other, the female power connection terminal base of the first connector is accommodated in the second space and tightly connected to each other, the second protective cover ring is accommodated in the first space, and the first protective cover ring and the second protective cover ring form a structure of double protective cover ring.

According to an embodiment, the disclosure provides a set of cable connectors for electric motor vehicle, the set of cable connectors includes a first connector and a second connector. The first connector includes a first body; a female signal connection terminal base disposed on a connection surface of the first body and including a plurality of second signal connection terminals; a female power connection terminal base disposed on the connection surface of the first body and including at least two female power connection insertion holes formed thereon; and a first protective cover ring disposed on the connection surface of the first body and around the female signal connection terminal base and the female power connection terminal base, wherein a first space is formed between the first protective cover ring and the female signal connection terminal base and the female power connection terminal base. The second connector includes a second body; a male signal connection terminal base disposed on a connection surface of the second body and including a plurality of first signal connection terminals corresponding in position to the plurality of second signal connection terminals; at least two male power connection terminals disposed on the connection surface of the second body and corresponding in position to the at least two female power connection insertion holes; a second protective cover ring disposed on the connection surface of the second body disposed around the male signal connection terminal base and the male power connection terminal, wherein a second space is formed between the second protective cover ring and the male signal connection terminal base and the male power connection terminal; wherein when the first connector and the second connector are combined with each other, the female power connection terminal base of the first connector is accommodated in the second space to make the first connector and the second connector tightly connect with each other, and the second protective cover ring is accommodated in the first space, so that the first protective cover ring and the second protective cover ring form a structure of double protective cover ring.

### BRIEF DESCRIPTION OF THE DRAWINGS

The structure, operating principle and effects of the disclosure will be described in detail by way of various embodiments which are illustrated in the accompanying drawings.
Figs. 1A and 1B are a perspective view and an elevational view of a male transmission cable of a conventional cable connector for electric motor vehicle.
Fig. 2A is a perspective view of an embodiment of a first connector of a set of cable connectors for electric motor vehicle, according to the disclosure.
Fig. 2B is an elevational view of an embodiment of a first connector of a set of cable connectors for electric motor vehicle, according to the disclosure.
Fig. 2C is a side view of an embodiment of a first connector of a set of cable connectors for electric motor vehicle, according to the disclosure.
Fig. 2D is a perspective view of an embodiment of a second connector of a set of cable connectors for electric motor vehicle, according to the disclosure.
Fig. 2E is an elevational view of an embodiment of a second connector of a set of cable connectors for electric motor vehicle, according to the disclosure.
Fig. 2F is a side view of an embodiment of a second connector of a set of cable connectors for electric motor vehicle, according to the disclosure.
Fig. 3A is a perspective view of a first connector and a second connector of a set of cable connectors for electric motor vehicle, according to the disclosure.
Fig. 3B is a sectional view of a first connector and a second connector of a set of cable connectors for electric motor vehicle, before the first connector and the second connector are connected.
Fig. 3C is a sectional view of a first connector and a second connector of a set of cable connectors for electric motor vehicle, after the first connector and the second connector are connected.

### DETAILED DESCRIPTION

The following embodiments of the disclosure are herein described in detail with reference to the accompanying drawings. These drawings show specific examples of the embodiments of the disclosure. These embodiments are provided so that this disclosure will be thorough and complete, and will fully convey the scope of the invention to those skilled in the art. It is to be acknowledged that these embodiments are exemplary implementations and are not to be construed as limiting the scope of the disclosure in any way. Further modifications to the disclosed embodiments, as well as other embodiments, are also included within the scope of the appended claims.

These embodiments are provided so that this disclosure is thorough and complete, and fully conveys the inventive concept to those skilled in the art. Regarding the drawings, the relative proportions, and ratios of elements in the drawings may be exaggerated or diminished in size for the sake of clarity and convenience. Such arbitrary proportions are only illustrative and not limiting in any way. The same reference numbers are used in the drawings and description to refer to the same or like parts. As used herein, the singular forms "a", "an" and "the" are intended to include the plural forms as well, unless the context clearly indicates otherwise.

It is to be acknowledged that, although the terms 'first', 'second', 'third', and so on, may be used herein to describe various elements, these elements should not be limited by these terms. These terms are used only for the purpose of distinguishing one component from another component. Thus, a first element discussed herein could be termed a second element without altering the description of the present disclosure. As used herein, the term "or" includes all combinations of one or more of the associated listed items.

It will be acknowledged that when an element or layer is referred to as being "on," "connected to" or "coupled to" another element or layer, it can be directly on, connected or coupled to the other element or layer, or intervening elements or layers may be present. In contrast, when an element is referred to as being "directly on," "directly connected to" or "directly coupled to" another element or layer, there are no intervening elements or layers present.

In addition, unless explicitly described to the contrary, the words "comprise" and "include", and variations such as "comprises", "comprising", "includes", or "including", will be acknowledged to imply the inclusion of stated elements but not the exclusion of any other elements.

In the disclosure, a signal terminal module and a power terminal module are separately disposed on and integrated into a first connector and a second connector of the set of cable connectors for electric motor vehicle, respectively, and a structure of double protective cover ring is integrated on the set of cable connectors, so that when the first connector and the second connector are combined with each other, the set of cable connectors the disclosure can provide combining forces including a combining force between signal terminals, a combining force between power terminals, combining forces of the two protective cover rings, and a combining force between the buckle portions separately disposed on the first and second connectors, thereby achieving the technical effects of providing extremely stable combination and higher waterproof level. It should be noted that the above-mentioned combining forces can also include the combining force between the protective cover ring and the power terminal, and static friction and internal mutual interference between materials.

An embodiment will be described in the following paragraphs to explain how different structures are integrated on the set of cable connectors for electric motor vehicle in the disclosure, so as to implement the anti-mistaking function and the technical effects of more stable connection and higher waterproof level, thereby solving the technology problem that the connectors of the conventional cables may fail to tightly combine with each other.

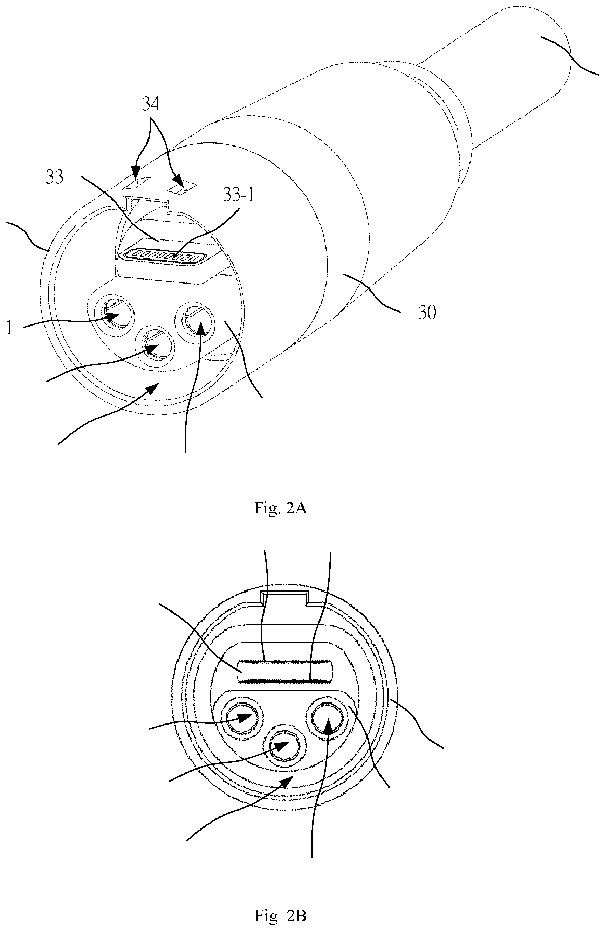

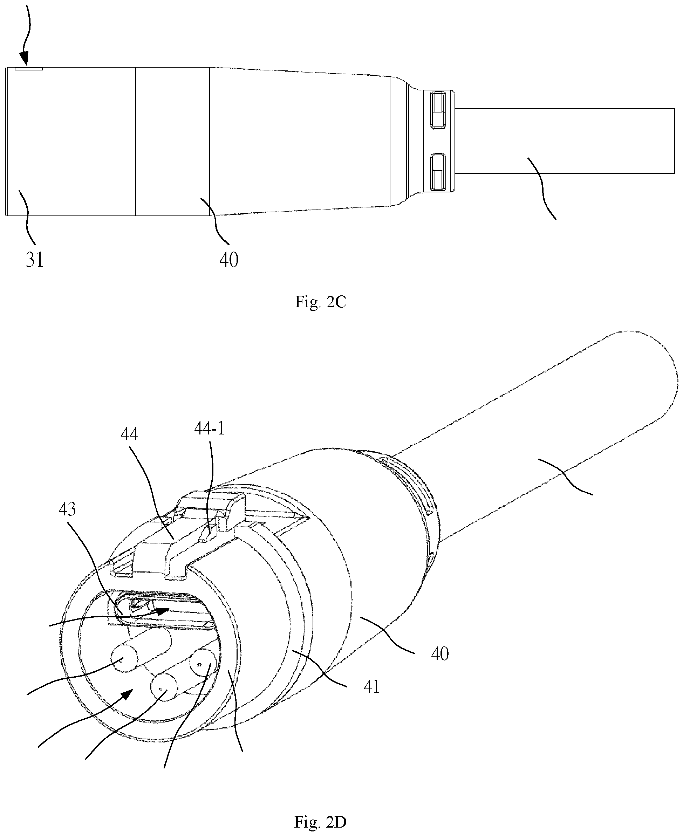

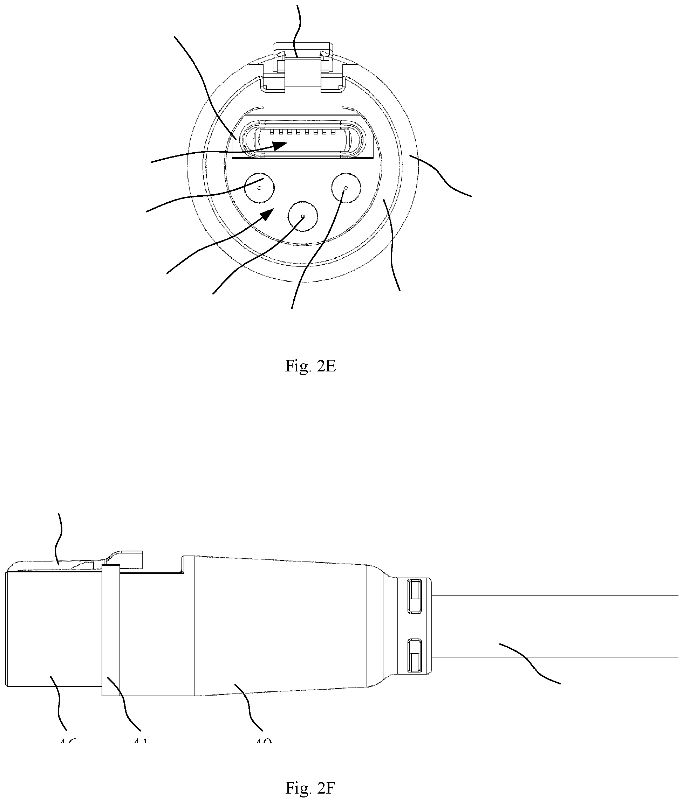

Please refer to Figs. 2A to 2F. Figs. 2A to 2C are an elevational view, a front view, and a side view of an embodiment of a first connector of a set of cable connectors for electric motor vehicle, according to the disclosure. Figs. 2D to 2F are an elevational view, a front view, and a side view of an embodiment of a second connector of a set of cable connectors for electric motor vehicle, according to the disclosure.

The first connector of the set of cable connectors for electric motor vehicle includes two terminals and a protective cover ring; as shown in Fig. 2A, the two terminals are a male signal connection terminal base 33 and a female power connection terminal base 32, respectively, the protective cover ring is a first protective cover ring 31, and the male signal connection terminal base 33, the female power connection terminal base 32 and the first protective cover ring 31 are disposed on a connection surface of the first body 30. The distal end of the first body 30 is connected to a first cable 35 which is a transmission cable. The male signal connection terminal base 33 is disposed on the connection surface of the first body 30 and includes a plurality of first signal connection terminals, as shown in Fig. 2B, the first signal connection terminal 33-1 and first signal connection terminal 33-2 are disposed in an up-down-symmetry configuration, such as the configuration of Apple Lightning standard or USB Type-C standard. In another embodiment, the first signal connection terminal can be in single-side connection terminal configuration; basically, the amount of the signal connection terminals, including a Hall signal line, is in a range of 2 to 6 and can be increased upon demand. The female power connection terminal base 32 is disposed on the connection surface of the first body 30 and includes at least two female power connection insertion holes formed thereon, the embodiment shown in Figs. 2A and 2B includes three insertion holes including a female power connection insertion hole 32-1, a female power connection insertion hole 32-2 and a female power connection insertion hole 32-3. The first protective cover ring 31 is disposed on the connection surface of the first body 30 and around the male signal connection terminal base 33 and the female power connection terminal base 32, and a first space 36 is formed between the first protective cover ring 31, the male signal connection terminal base 33 and the female power connection terminal base 32. The first space 36 is configured to accommodate the second protective cover ring 46 of the second connector.

Figs. 2D to 2F show the structure of the second connector. The second connector includes a second body 40, a female signal connection terminal base 43, a plurality of male power connection terminals and a second protective cover ring 46. A second cable 45 is connected on a distal end of the second body 40, the female signal connection terminal base 43 is disposed on a connection surface of the second body 40 and includes a plurality of second signal connection terminals corresponding in position to the plurality of first signal connection terminals; as shown in Figs. 2D and 2E, the female signal connection terminal base 43 can be a female terminal hole 43-1 which is able to accommodate a plurality of first signal connection terminals arranged in an up-down symmetry configuration, such as the female terminal hole for Lighting standard or USB Type-C standard. In another embodiment, the female terminal hole can be for single-side connection terminal configuration. Basically, the amount of the signal connection terminals including a Hall signal line is in a range of 2 to 6, and can be increased upon demand. The plurality of male power connection terminals are disposed on the connection surface of the second body 40 and corresponds to at least two female power connection insertion holes of the first connector. The embodiment shown in Figs. 2D and 2E is provided with three male power connection terminals including a male power connection terminal 42-1, a male power connection terminal 42-2 and a male power connection terminal 42-3. The second protective cover ring 46 is disposed on the connection surface of the second body 40 and around the female signal connection terminal base 43 and the plurality of male power connection terminals, and a second space 47 is formed between the second protective cover ring 46, the female signal connection terminal base 43 and the plurality of male power connection terminals.

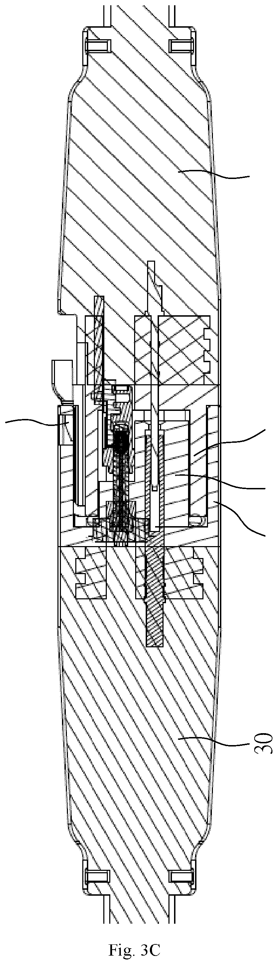

The female power connection terminal base 32 of the first connector is accommodated and tightly connected in the second space 47, and the second protective cover ring 46 is accommodated in the first space 36, so that the first protective cover ring 31 and the second protective cover ring 46 can form a structure of double protective cover ring, as shown in Fig. 3C, thereby enhancing the waterproof function.

The embodiment shown in Figs. 2A to 2F is further provided with a first buckle portion 34 and a second buckle portion 44 which are designed in matching structures. The first buckle portion 34 is disposed on an outer side of the first protective cover ring 31 of the first connector, and the second buckle portion 44 is disposed on an outer side of the second body 40 of the second connector. When the first connector and the second connector are combined with each other, the block 44-1 of the second buckle portion 44 is buckled with the first buckle portion 34, which is in a form of buckle hole, so that the first connector and the second connector can be tightly combined, as shown in Fig. 3C. The buckle mechanism design is well known for a person have ordinary skill in the art, so the detailed description is not repeated herein.

To increase the friction between the first protective cover ring 31 and the second protective cover ring 46 to enhance the combining force, at least one of the first protective cover ring 31 and the second protective cover ring 46 can be made by rubber material.

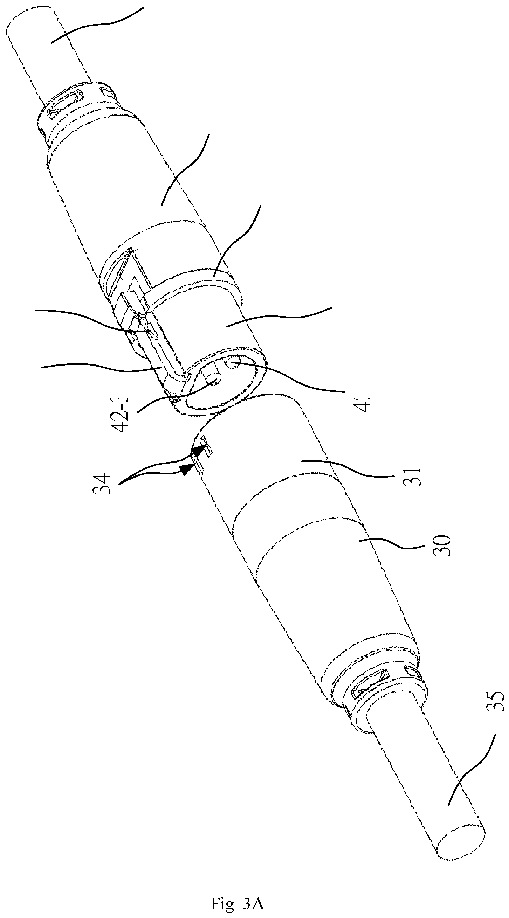

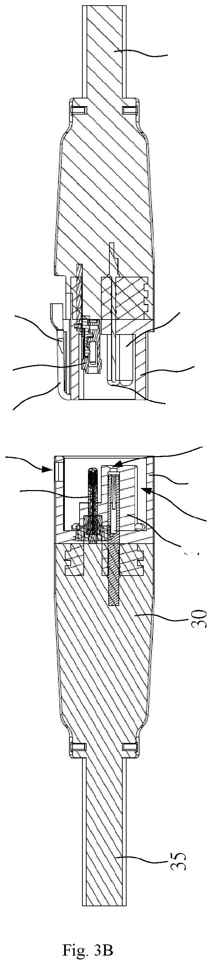

Please refer to Figs. 3A to 3C. Fig. 3A is an elevational view of a first connector and a second connector of a set of cable connectors for electric motor vehicle, according to the disclosure. Fig. 3B is a sectional view of a first connector and a second connector of a set of cable connectors for electric motor vehicle, before the first connector and the second connector are connected. Fig. 3C is a sectional view of a first connector and a second connector of a set of cable connectors for electric motor vehicle, after the first connector and the second connector are completely connected. As shown in Figs. 3A to 3C, the first connector (such as the embodiment shown in Figs. 2A to 2C) and the second connector (such as the embodiment shown in Figs. 2D to 2F) are symmetrical to each other, so that the first connector and the second connector can be tightly combined to form good combining forces between: (I) the male signal connection terminal base 33 and the female signal connection terminal base 43, (II) the female power connection terminal base 32, the male power connection terminal 42-1, the male power connection terminal 42-2 and the male power connection terminal 42-3, (III) the second protective cover ring 46 and the first space 36, (IV) the block 44-1 of the second buckle portion 44 and the first buckle portion 34, and (V) the first protective cover ring 31 and the second protective cover ring 46. The first protective cover ring 31 is stopped in the recessed surface 41 of the second body 40.

Obviously, the tight combination between the first protective cover ring 31 and the second protective cover ring 46 can provide a structure of double protective cover ring, so as to provide higher waterproof level after the set of cable connectors for electric motor vehicle is completely assembled.

The configuration of applying the first buckle portion 34 and the second buckle portion 44 in the set of cable connectors for electric motor vehicle of the disclosure allow the user to separate a male product and a female product by just applying force on the buckling position by thumb to move downwardly the buckle, so that the male product can be pulled out of and separated from the female product. The buckle design can improve the mating reliability of products, prevent the products from loosening during riding, and reduce the environmental impact on the product, thereby protecting the performance of the product from being impacted in high-temperature environment, low-temperature environment, or another harsh environment. Furthermore, the configuration of the buckle portions of the disclosure can effectively prevent the product from falling off, and reduce the force required to pull out the product, so that the user just need to press the buckle to pull the male product out of the female product. Furthermore, when the products are matched and connected with each other, a kick sound is made after the first buckle portion 34 is inserted into the second buckle portion 44 in the mating position, to remind the user that the products are connected and matched in place, thereby improving the user experience.

Furthermore, according to the embodiment shown in Figs. 2A to 2F, each of the first protective cover ring 31 and the second protective cover ring 46 is in a circular structural design, and each of the male signal connection terminal base 33 and the female signal connection terminal base 43 can adopt the standard interface, so that the production cost can be greatly reduced.

In the embodiment shown in Figs. 2A to 2F, the first connector adopts the configuration of the male signal connection terminal base arranged together with the female power connection terminal base, and the second connector adopts the configuration of female signal connection terminal base arranged together with the plurality of male power connection terminals. In another embodiment of the disclosure, the first connector can adopt the configuration of the female signal connection terminal base arranged together with the female power connection terminal base, and the second connector can adopt the configuration of the male signal connection terminal base arranged together with the plurality of male power connection terminals, and the same technology the same as that of the first embodiment can also be achieved.

Therefore, another embodiment of the disclosure provides a set of cable connectors for electric motor vehicle, and the set of cable connectors includes a first connector and a second connector. The first connector includes a first body; a female signal connection terminal base disposed on a connection surface of the first body and including a plurality of second signal connection terminals; a female power connection terminal base disposed on the connection surface of the first body and including at least two female power connection insertion holes formed thereon; a first protective cover ring disposed on the connection surface of the first body and around the female signal connection terminal base and the female power connection terminal base, wherein a first space is formed between the first protective cover ring and the female signal connection terminal base and the female power connection terminal base. The second connector includes a second body; a male signal connection terminal base disposed on a connection surface of the second body and including a plurality of first signal connection terminals corresponding in position to the plurality of second signal connection terminals; at least two male power connection terminals disposed on the connection surface of the second body and corresponding in position to the at least two female power connection insertion holes; a second protective cover ring disposed on the connection surface of the second body and around the male signal connection terminal base and the male power connection terminal, wherein a second space is formed between the second protective cover ring and the male signal connection terminal base and the male power connection terminal. When the first connector and the second connector are combined with each other, the female power connection terminal base of the first connector is accommodated and tightly connected in the second space, the second protective cover ring is accommodated in the first space, so that the first protective cover ring and the second protective cover ring form a structure of double protective cover ring.

The above-mentioned embodiment is to swap the male signal connection terminal base 33 of Fig. 2A and the female signal connection terminal base 43 of Fig. 2D and can also achieve the technical effect of multiple different combining forces.

Please refer to Figs. 2B and 2E. It can find that the first space 36 is adjacent to the first protective cover ring, and parts of the male signal connection terminal base 33 and the female power connection terminal base 32, and the first space 36 has a shape matching with the second protective cover ring 46, so that the second protective cover ring 46 can be in contact with the first protective cover ring 31, the male signal connection terminal base 33 and the female power connection terminal base 32 to generate static friction after the second protective cover ring 46 is inserted into the first space 36. The above-mentioned configuration of generating the static friction is also a technical feature of the disclosure.

According to above-mentioned contents, the set of cable connectors for electric motor vehicle of the disclosure applies the structural feature of separating the signal connection base and the power connection base and adopts the technical feature of double protective cover ring to achieve the technical effect of stable combination structure and higher waterproof level, so that the technical problem of unstable combination and insufficient waterproof level can be solved. The set of cable connectors for electric motor vehicle of the disclosure is also easier for a user to plug and pull the connector to achieve more stable combination by means of the buckle mechanism.

The disclosure disclosed herein has been described by means of specific embodiments. However, numerous modifications, variations and enhancements can be made thereto by those skilled in the art without departing from the spirit and scope of the disclosure set forth in the claims.

## Claims

1. A set of cable connectors for electric motor vehicle, comprising:
a first connector comprising:
a first body;
a male signal connection terminal base disposed on a connection surface of the first body and comprising a plurality of first signal connection terminals;
a female power connection terminal base disposed on the connection surface of the first body and comprising at least two female power connection insertion holes formed thereon; and
a first protective cover ring disposed on the connection surface of the first body and around the male signal connection terminal base and the female power connection terminal base, wherein a first space is formed between the first protective cover ring, the male signal connection terminal base, and the female power connection terminal base; and
a second connector comprising
a second body;
a female signal connection terminal base disposed on a connection surface of the second body and comprising a plurality of second signal connection terminals corresponding in position to the plurality of first signal connection terminals;
at least two male power connection terminals disposed on the connection surface of the second body and corresponding in position to the at least two female power connection insertion holes; and
a second protective cover ring disposed on the connection surface of the second body and around the female signal connection terminal base and the male power connection terminal, wherein a second space is formed between the second protective cover ring and the female signal connection terminal base and the male power connection terminal;
wherein when the first connector and the second connector are combined with each other, the female power connection terminal base of the first connector is accommodated in the second space and tightly connected to each other, the second protective cover ring is accommodated in the first space, and the first protective cover ring and the second protective cover ring form a structure of double protective cover ring.

2. The set of cable connectors for electric motor vehicle according to claim 1, wherein the plurality of first signal connection terminals of the male signal connection terminal base are arranged in pin-symmetry configuration.

3. The set of cable connectors for electric motor vehicle according to claim 1, further comprising:
a first buckle portion disposed on an outer side of the first protective cover ring of the first connector;
a second buckle portion disposed on an outer side of the second body of the second connector, wherein when the first connector and the second connector are combined with each other, the second buckle portion is buckled with the first buckle portion to make the first connector and the second connector tightly combine with each other.

4. The set of cable connectors for electric motor vehicle according to claim 1, wherein the second protective cover ring is made by rubber material.

5. The set of cable connectors for electric motor vehicle according to claim 1, wherein the first protective cover ring is made by rubber material.

6. A set of cable connectors for electric motor vehicle, comprising:
a first connector comprising:
a first body;
a female signal connection terminal base disposed on a connection surface of the first body and comprising a plurality of second signal connection terminals;
a female power connection terminal base disposed on the connection surface of the first body and comprising at least two female power connection insertion holes formed thereon; and
a first protective cover ring disposed on the connection surface of the first body and around the female signal connection terminal base and the female power connection terminal base, wherein a first space is formed between the first protective cover ring and the female signal connection terminal base and the female power connection terminal base; and
a second connector comprising:
a second body;
a male signal connection terminal base disposed on a connection surface of the second body and comprising a plurality of first signal connection terminals corresponding in position to the plurality of second signal connection terminals;
at least two male power connection terminals disposed on the connection surface of the second body and corresponding in position to the at least two female power connection insertion holes;
a second protective cover ring disposed on the connection surface of the second body disposed around the male signal connection terminal base and the male power connection terminal, wherein a second space is formed between the second protective cover ring and the male signal connection terminal base and the male power connection terminal;
wherein when the first connector and the second connector are combined with each other, the female power connection terminal base of the first connector is accommodated in the second space to make the first connector and the second connector tightly connect with each other, and the second protective cover ring is accommodated in the first space, so that the first protective cover ring and the second protective cover ring form a structure of double protective cover ring.

7. The set of cable connectors for electric motor vehicle according to claim 6, wherein the plurality of first signal connection terminals of the male signal connection terminal base are arranged in pin-symmetry configuration.

8. The set of cable connectors for electric motor vehicle according to claim 6, further comprising:
a first buckle portion disposed on an outer side of the first protective cover ring of the first connector; and
a second buckle portion disposed on an outer side of the second body of the second connector, wherein when the first connector and the second connector are combined with each other, the second buckle portion is buckled with the first buckle portion to make the first connector and the second connector tightly combine with each other.

9. The set of cable connectors for electric motor vehicle according to claim 6, wherein the second protective cover ring is made by rubber material.

10. The set of cable connectors for electric motor vehicle according to claim 6, wherein the first protective cover ring is made by rubber material.
